# FASCICULE DE BREVET EUROPEEN

(11) **EP 1 026 589 B1**
(45) Date de publication et mention de la délivrance du brevet: **14.05.2003**
(21) Numéro de dépôt: 00400215.0
(22) Date de dépôt: 27.01.2000
(51) Int. Cl.: G06F 11/14

(54) **Procédé et outil d'analyse et de localisation de pannes matérielles dans une machine informatique**
Verfahren und Analysewerkzeug zur Fehlerortung in einem Rechner
Method and analysis tool for computer fault isolation

(30) Priorité: 08.02.1999 FR 9901448
(43) Date de publication de la demande: 09.08.2000
(73) Titulaire: BULL S.A., 78430 Louveciennes (FR)
(72) Inventeur: Caudrelier, Christian, 38640 Claix (FR); Garrigues, Philippe, 38330 Montbonnot (FR); Espié, Eric, 38250 Villard de Lans (FR); Randon, Christian, 38170 Seyssinet (FR)

(56) Documents cités:
- EP-A- 0 699 997
- US-A- 4 649 515
- US-A- 5 164 912
- US-A- 5 394 543

## Description

La présente invention se situe dans le domaine de la résolution des pannes matérielles et de la maintenance des machines informatiques.

Elle concerne plus particulièrement un procédé d'analyse des informations ayant été enregistrées au moment où un dysfonctionnement a été détecté dans la machine pour localiser le ou les composants à l'origine de la panne et ne remplacer uniquement que le ou les composants défaillants.

Elle concerne également un outil d'analyse et de localisation de pannes et une machine l'incorporant.

La baisse constante des coûts des machines informatiques conduit parfois les constructeurs à baisser la qualité de certains composants matériels.

Un composant peut être par exemple un ASIC, abréviations anglo-saxonnes pour "Application Specific Integrated Circuit" (circuit intégré spécifique) ou un processeur.

L'utilisateur se trouve donc de plus en plus fréquemment confronté à des problèmes liés à des erreurs dues au matériel. Toutes les machines sont plus ou moins capables aujourd'hui de relever ces erreurs qui quelquefois peuvent conduire à des pannes sur certaines parties de la machine, voire à un arrêt complet de la machine.

Chaque composant sensible d'une machine possède des registres d'état indiquant le niveau de fonctionnement du composant en question.

Un état déterminé de la machine est caractérisé par une "signature" de ses registres d'état, c'est-à-dire une valeur caractéristique de chaque registre pour cet état déterminé.

Ce sont ces valeurs qui constituent les informations qui seront ensuite analysées par la machine.

On distingue plusieurs types de pannes dans une machine informatique.

Selon un premier type, la panne provoque une erreur mineure qui reste localisée au niveau d'un composant et est directement corrigée par le logiciel gérant ce composant et l'utilisateur ne ressent alors aucune perturbation dans son travail.

Selon un deuxième type, la panne peut provoquer une erreur dont la gravité ne permet plus de garantir l'intégrité des données traitées et peut obliger à redémarrer la machine.

La présente invention s'intéresse plus particulièrement mais non exclusivement à ce deuxième type de panne qui peut provoquer des arrêts de fonctionnement de la machine, connus également et respectivement sous les terminologies anglo-saxonnes de "machine check" et de "checkstop".

Dans le cas d'un arrêt de type "machine check", les informations collectées sont ciblées sur le composant ayant détecté l'erreur tandis que, dans le cas d'un arrêt de type "checkstop", toutes les "signatures" des registres d'état de la machine sont collectées.

Dans les deux cas, il faut ensuite interpréter les valeurs des registres d'état pour déterminer l'erreur et éventuellement en déduire la cause.

Chaque composant de la machine est en relation plus ou moins étroite avec un ou plusieurs autres composants de cette machine que nous appellerons "composants voisins". Si un composant comporte un défaut, il est relevé par les composants voisins dans leurs registres d'état. L'utilisateur est donc prévenu qu'il y a eu un défaut sur la machine, mais dans certains cas, rien ne lui permet de savoir avec précision quel est le composant défectueux à l'origine de l'erreur.

On a bien la signature des registres d'état de la machine en cas d'erreur, mais pas une vue d'ensemble de l'état de la machine. Il y a un trou dans l'information. On connaît des informations précises mais partielles (les registres d'état), et une information globale mais imprécise (il y a une erreur de fonctionnement). Quand l'erreur se solde par un arrêt brutal de la machine, il faut se plonger dans une documentation épaisse pour en extraire la signification des registres d'état. Cela nécessite le concours d'un expert pour faire une analyse globale a posteriori de ces registres.

Le document EP-A-0 699 997 révéle un procédé et un dispositif pour l'identification de pannes dans un système complexe comportant une pluralité d'éléments connectés ensemble selon lesquels on divise ledit système complexe en une pluralité d'ensembles étant susceptible d'émettre une information de panne.

Les outils d'analyse d'erreurs existants peuvent fournir l'ensemble des valeurs des registres sous forme de texte et peuvent même faire l'analyse de ces valeurs. Cependant la description des registres d'état et les règles d'interprétation de leur contenu sont noyées dans le code machine de ces outils.

Comme un outil est généralement dédié à une version de matériel, Il n'est pas possible d'ajouter de nouvelles descriptions de registres ou de nouvelles règles d'interprétation sans refaire une nouvelle version de l'outil.

Le but de l'invention est de pallier notamment ces inconvénients.

A cet effet, l'invention a pour objet un procédé d'analyse et de localisation de pannes matérielles dans une machine informatique stockant des informations d'erreurs de fonctionnement générées par les différents composants matériels sensibles de la machine.

Il est caractérisé en ce qu'il consiste à créer une interface homme/machine par l'intermédiaire de laquelle les composants et les règles d'interprétation des erreurs sont décrits dans un langage structuré et exploités par la machine comme des paramètres externes en corrélation avec les informations d'erreurs pour détecter le ou les composants défaillants.

L'invention a également pour objet un outil d'analyse et de localisation de pannes matérielles dans une machine informatique comportant des moyens de stockage des informations d'erreurs générées par les composants sensibles de la machine.

Il est caractérisé en ce qu'il comporte un moteur d'analyse d'erreurs recevant sur une première série d'entrées les informations d'erreurs, et recevant sur une deuxième série d'entrées les paramètres nécessaires à la description des composants sensibles de la machine et à la description des règles d'interprétation des erreurs, et en ce qu'il comporte une interface homme/machine entre l'outil et l'expert en composants pour lui permettre de formuler les paramètres dans un langage structuré.

Enfin, l'invention a pour objet une machine incorporant l'outil défini ci-dessus.

La formulation des paramètres de description des registres et des règles d'interprétation des erreurs selon l'invention permet d'ajouter de nouvelles descriptions ou d'enrichir l'interprétation par simple édition de fichiers sources écrits dans un format déterminé, sans avoir à refaire une nouvelle version de l'outil à chaque évolution du matériel.

De plus, l'architecture de l'outil selon l'invention est évolutive et sa maintenance est facilitée en séparant bien l'outil d'analyse proprement dit (le moteur) traitant les informations en code "machine", de la description des registres d'état et des règles d'interprétation écrites en code "source".

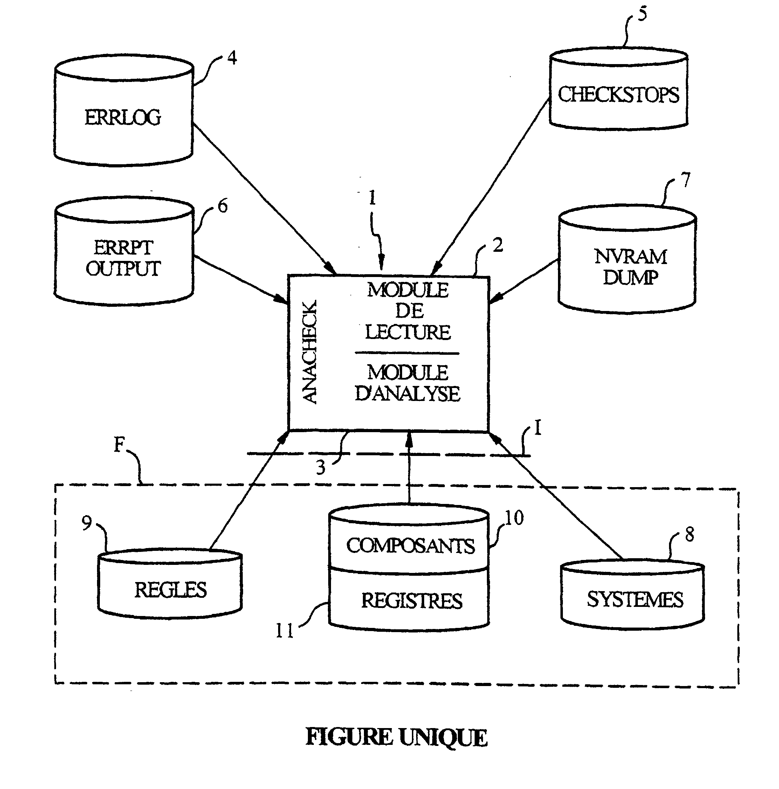

D'autres caractéristiques et avantages de l'invention apparaîtront à la lecture de la description qui suit et de la figure annexée qui représente l'architecture générale d'un outil d'analyse selon l'invention.

L'outil selon l'invention est organisé autour d'un moteur d'analyse ANACHECK 1. Il comporte un module de lecture 2 et un module d'analyse 3. Le moteur d'analyse ANACHECK 1 est un composant standard.

Le module de lecture 2 reçoit sur une première série d'entrées, sous forme de fichiers, binaire et ASCII, toutes les informations enregistrées issues des divers moyens de détection d'erreurs de la machine.

Quatre des principaux fichiers d'erreur contenant des informations d'erreurs survenues durant le fonctionnement de la machine, et considérées sur une période de temps déterminée, sont représentés sur la figure : le fichier ERRLOG 4, le fichier CHECKSTOPS 5, le fichier ERRPT OUTPUT 6 et le fichier NVRAM DUMP 7.

Le fichier ERRLOG 4 est un fichier d'erreurs en binaire. Il regroupe sous forme de journal un certain nombre informations d'erreurs dont les erreurs de type "machine check".

Le fichier CHECKSTOPS 5 est un fichier d'erreurs en binaire. Il regroupe à lui seul toutes les informations d'erreurs de type "checkstop" ayant abouti à un arrêt brutal de la machine.

Le fichier NVRAM DUMP 7 (Non Volatile RAM dump) est un fichier d'erreurs en binaire. Il regroupe les informations d'erreurs fournies par le processeur de service ("service processor" en terminologie anglo-saxonne). Ces informations peuvent être enregistrées sur une disquette et analysées sur une autre machine quand la machine d'origine est indisponible pour l'analyse.

Le fichier ERRPT OUTPUT 6 est un fichier d'erreurs au format ASCII.

Il contient les mêmes erreurs que le fichier ERRLOG 4 mais exprimées en ASCII. Il est destiné a être lu par l'administrateur de la machine ou le personnel de maintenance.

Le module d'analyse 3 reçoit sur une deuxième série d'entrées, sous forme de fichiers "source" 8 à 11, externes au moteur ANACHECK 1, tous les paramètres nécessaires à la description des registres d'état, de leur contenu ainsi qu'à la définition des règles d'interprétation.

L'analyse est basée sur une identification des registres d'état de la machine. Dans le cas d'erreurs simples, la traduction est directement effectuée par le moteur ANACHECK 1.

Dans le cas d'erreurs plus graves de type "checkstop" et "machine check", une analyse fine des registres d'état s'impose.

Cette analyse opère une corrélation entre l'ensemble des informations d'erreurs collectées dans les fichiers d'erreur 4 à 7 et l'ensemble des règles de description des registres d'état et d'interprétation des erreurs, contenues dans les fichiers de paramètres afin de localiser le ou les composant défaillants.

Les principaux fichiers de paramètres utilisés, alimentant le module d'analyse 3 du moteur ANACHECK 1, sont le fichier SYSTEMES 8, le fichier REGLES 9, le fichier COMPOSANTS 10, et le fichier REGISTRES 11.

Le fichier SYSTEMES 8 contient la liste des identifiants des différentes machines pour lesquelles le moteur est apte à analyser les pannes, et un moyen d'identification de la machine en cours d'analyse.

Le fichier REGLES 9 est le fichier de base nécessaire à l'analyse. Il comporte tous les paramètres de description des registres d'état et des règles d'interprétation.

Il se compose de trois parties principales :
- une première partie comporte une table d'adressage des registres d'état de la machine permettant de définir la structure des registres et d'accéder aux registres ayant détecter une erreur ;
- une deuxième partie comporte la description du contenu des registres (la signature) ; et
- une troisième partie comporte l'ensemble des règles permettant d'extraire l'information essentielle c'est-à-dire la localisation des pannes, à partir de la signature de certains registres.

Le fichier COMPOSANTS 10 est associé au fichier REGISTRES 11. Il répertorie tous les composants matériels de la machine.

Le fichier REGISTRES 11 associé, contient toutes les coordonnées des registres des composants matériels répertoriés dans le fichier COMPOSANTS 10.

L'identification d'un registre ou d'une partie d'un registre utilise une méthode connue consistant à masquer des éléments binaires (ou bits). Pour un composant matériel donné, on peut avoir un ou plusieurs registres ou parties de registre décrits.

Les paramètres de description sont saisis dans des fichiers 8 à 11, suivant un format déterminé, par les concepteurs des microprogrammes associés à chaque composant matériel de la machine et contenant un ensemble de données fixes, ou statuts, définissant ce composant. Ces microprogrammes sont plus connus sous la terminologie anglo-saxonne "firmware" et les concepteurs sont souvent désignés sous le terme de spécialistes ou d'experts.

Face à un problème particulier, les experts n'ont pas besoin de consulter la globalité de tous les registres d'état de la machine.

Ils se contentent généralement de consulter quelques parties de certains registres. Par contre, Ils doivent décrire précisément l'état d'un ensemble de registres de la machine en fonction des erreurs qui peuvent survenir, et doivent préciser l'origine de chaque erreur en fonction de l'état des registres.

Ces descriptions sont exprimées selon une syntaxe déterminée qui constitue un langage de description structuré, exploitable par le module d'analyse 3 du moteur ANACHECK 1.

L'ensemble des fichiers de paramètres 8 à 11 définissent un fichier électronique F, délimité sur la figure par une ligne fermée discontinue et peut être supporté, par exemple, par un support amovible non représenté.

Cette caractéristique est intéressante, car elle permet d'utiliser le même fichier électronique de description F pour l'analyse d'une autre machine de même type.

L'outil selon l'invention introduit donc une interface utilisateur, ou interface homme/machine I, permettant à un expert d'accéder de l'extérieur de la machine, aux composants sensibles de la machine. Cette interface est matérialisée sur la figure par un segment de droite en trait interrompu entre le module d'analyse 3 et le fichier F.

Les principaux fichiers sont exploités dans l'ordre suivant :
1. le fichier COMPOSANTS 10 est utilisé pour stocker en mémoire les valeurs de tous les registres des composants sensibles de la machine ;
2. le fichier REGISTRES 11 est utilisé pour afficher la signification de tous les bits de statut identifiés par les informations d'erreurs ; et
3. le fichier REGLES 9 est utilisé pour déterminer le composant matériel à l'origine de la panne à partir des règles d'interprétation des erreurs.

La syntaxe utilisée pour ces trois principaux fichiers de paramètres met en oeuvre les expressions suivantes :
concernant les masques :
   [n] est le masque égal à 2^n ;
      [n1 , n2, ...] est le masque égal à 2^n1 | 2^n2 | ... ; et
      [n1-n2] est le masque égal à 2^n1 | 2^(n1+1) ... | 2^n2.

      Par exemple, le masque [0-2,10] correspond au mot 11100000 00100...0 , de 64 bits de long.
Concernant les registres :
   <component>:<register> désigne un registre d'un composant. Il est utilisé dans le fichier REGISTRES 11. Par exemple: SMC2:GSR;
   <component>*<occurences>:<register> désigne les occurrences multiples d'un registre. Par exemple : CPU*4:SRR1 ;$[mask] est utilisé dans la définition des registres pour désigner le registre courant dans le fichier REGISTRES 11. Cette notation est utilisée uniquement avec un masque. Par exemple: $ [0-7] correspond aux 8 premiers bits du registre courant ;
   <component>:<register>[mask] désigne la valeur suivante : valeur du registre et valeur du masque.

Par exemple: SMC2:GSR = 0xc00000 donne SMC2:GSR[1] = 0x800000.

Les paramètres sont des expressions manipulant les valeurs des registres, des masques, des constantes et des index d'occurrences.

Ces expressions manipulent les opérateurs suivants :
| correspond à un OU binaire ;
& correspond à un ET binaire ;
() correspond à des parenthèses respectivement ouvrante et fermante ;
>> correspond à un décalage binaire vers la droite ;
<< correspond à un décalage binaire vers la gauche ; et
* désigne l'index d'occurrence.

Par exemple :
(SMC2:M_ADDR[4] >> 59) | (SMC2:M_ADDR[0-2] >> 60)

Le type "paramètre" est "unsigned long long". Il représente un type de données qui est un entier non signé codé sur 64 bits. Il doit être utilisé avec les paramètres %11x dans les chaînes de caractères.

Par exemple, l'expression suivante
"mem0 : bank#%11x", (SMC2:M_ADDR[4] >> 59) | (SMC2:M_ADDR[0-2] >> 60)
permet d'imprimer le message avec le numéro du banc mémoire correspondant. Un banc mémoire se présente sous la forme de barrettes mémoires qui doivent être installées ensemble pour que la machine fonctionne.

Ces bancs mémoires sont aisément repérables par les techniciens qui effectuent la maintenance.

Les opérateurs de condition sont des expressions booléennes implicitement comparée à zéro. Le résultat est "vrai" si l'expression est différente de zéro et faux autrement.

Les opérateurs de condition admis sont les suivants :
|| correspond à un OU logique ;
&& correspond à un ET logique ;
== correspond à une égalité ;
! correspond à un NON logique ; et
() correspond à des parenthèses respectivement ouvrante et fermante.

L'utilisation de registres masqués, de constantes et de masques est autorisée.

A titre d'exemple dans un fichier REGISTRES 11, une condition peut être :
! (($[0-31] == 0) | | ($[0-31] == [0-31]))

Cela signifie que les 32 premiers bits du registre courant devraient avoir une valeur différente de 0 ou 0xFFFFFFFF.

A titre d'exemple dans le fichier REGLES 9, une condition peut être :
((DCBK*:GSR[2,10]) || ((!SMC2:GSR[1] && (DCBK*:GSR[1,9]))

Cela signifie que si le deuxième ou le dixième bit du registre GSR de l'occurrence courante du DCBK est présent, ou si les premier ou neuvième bits du registre sont présents et pas le premier bit du registre GSR du composant SMC2 alors la condition est vraie (et le composant correspondant DCBANK serait en défaut).

Le fichier COMPOSANTS 10 contient la description de l'ensemble des accès aux registres des composants matériels de la machine dont les registres sont copiés dans les fichiers d'erreurs.

Cette description permet d'accéder aux registres pour les analyser.

Une syntaxe pour le fichier COMPOSANTS 10 débute par :
// System: <SYS> Release: < version>
suivi de : 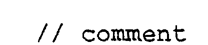 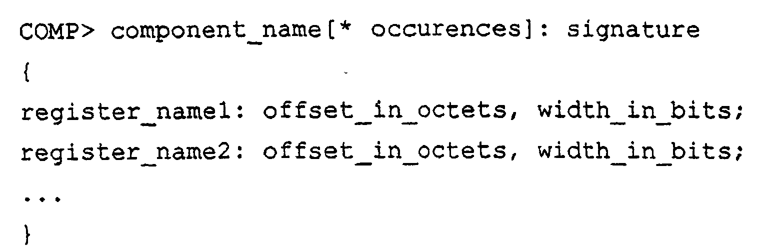 dans laquelle :
component_name correspond au nom du composant décrit ;
occurrences correspond à un champ optionnel utilisé pour mettre en facteur plusieurs composants (DCBK(*2), CPUs(*4)...) dans une seule définition ;
signature correspond à la signature du composant ;
register_name correspond au nom du registre défini ;
offset_in_octets correspond au décalage, exprimé en octets, à partir du début des données des registres copiées dans le fichier pour ce composant. Ce décalage correspond, par exemple, à un décalage dans la structure du processeur de service de l'ASIC correspondant.
width_in_bits correspond à la longueur du registre exprimé en bits (1-64).

Il est inutile de décrire les registres de tous les composants, mais tous les registres utilisés doivent être décrits. En effet, il y a beaucoup de registres qui sont copiés dans les fichiers d'erreur mais seulement quelques-uns d'entre eux sont utilisés pour l'analyse.

On donne ci-après un exemple de fichier de description de plusieurs composants ARB, SMC2, DCBK, DPCI et CPU620 mettant en oeuvre la syntaxe définie précédemment :

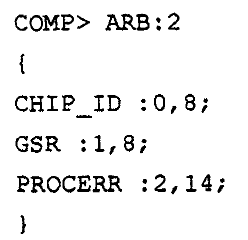

Le composant considéré ci-dessus est un ASIC dénommé ARB (Arbitre du bus système).

ARB : 2 signifie que le code de l'enregistrement dans les fichiers d'erreur est 2.

CHIP_ID correspond au nom d'un registre de l'ARB.

CHIP_ID : 0, 8; signifie que l'emplacement du registre CHIP_ID dans l'enregistrement de l'erreur concernant ARB est situé à 0 octet (donc au début du registre) et que le registre à une longueur de 8 bits.

La même description est ensuite faite pour les autres registres du composant et pour les autres composants.

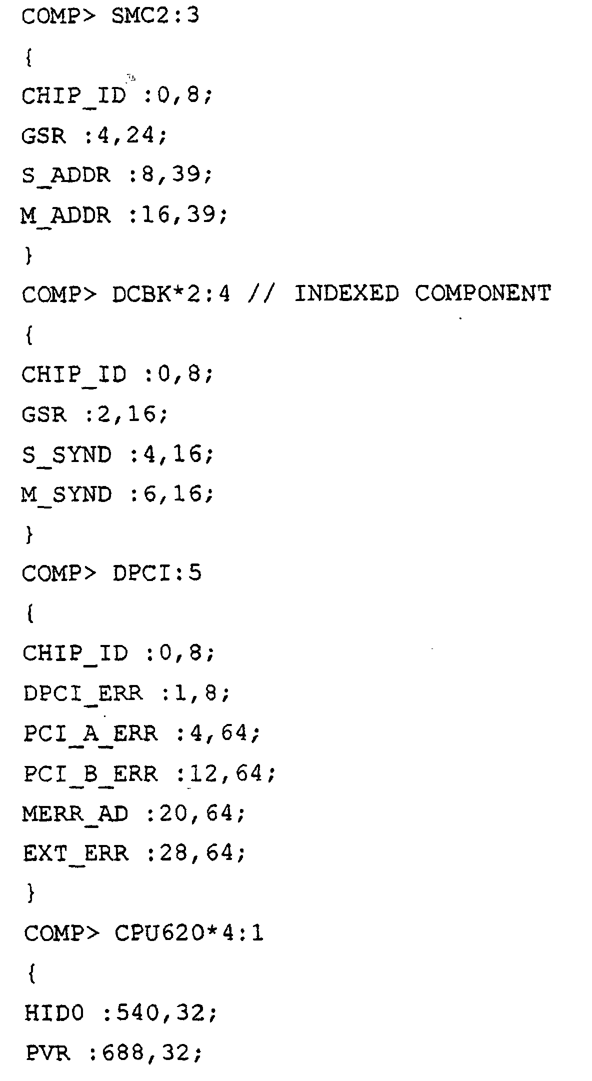

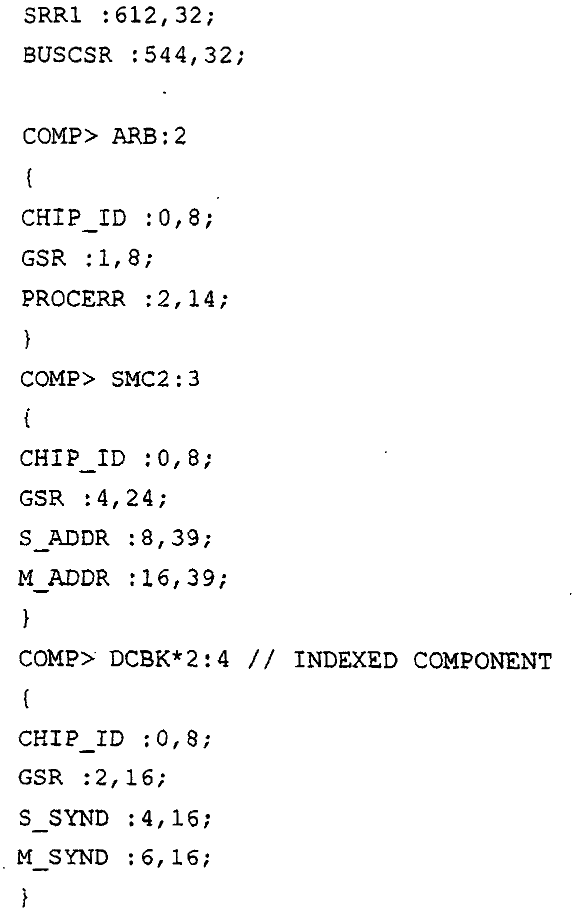

Dans l'exemple de description du composant DCBK ci-dessus, *2 signifie qu'il y a deux ASICs dans la machine.

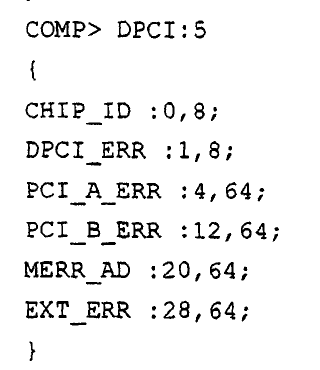

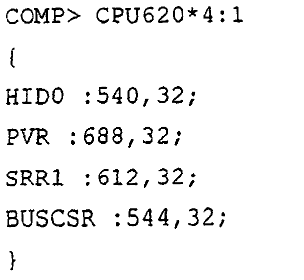

Le fichier REGISTRES 11 est utilisé pour décrire les bits de statut des registres de l'ASIC copiés dans les fichiers d'erreurs.

Cette description est utilisée par le moteur d'analyse ANACHECK 1 pour afficher les symptômes trouvés pour une erreur.

Une syntaxe pour le fichier REGISTRES 11 débute par :
// System: <SYS> Release: < version>
suivi de : 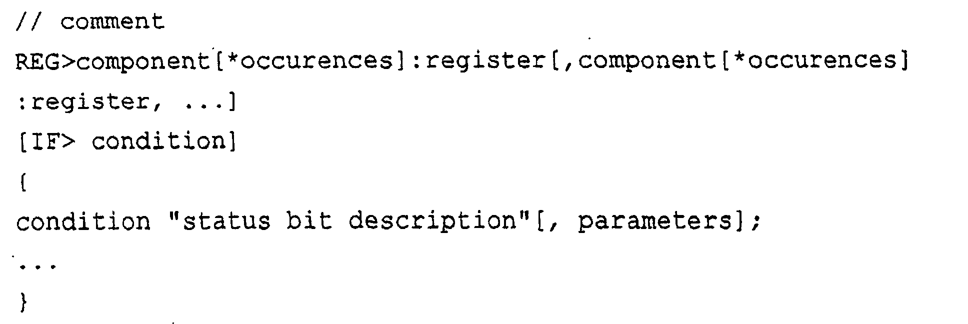 dans laquelle :
component correspond au nom du composant ;
occurrences correspond à un champ optionnel utilisé pour mettre en facteur plusieurs composants (DCBK, CPUs...) dans une seule définition ;
register correspond à un nom de registre du composant ;
condition correspond à une expression booléenne indiquant si le résultat de l'opération "valeur du registre courant ET un masque binaire" est nul (faux) ou non nul (vrai) ;

Par exemple, $ [0-2, 10] correspond à une condition pour laquelle on a la valeur du registre courant ET le masque 111000000010000...0 (64 bits de long). Si la valeur pour ce masque est différente de zéro alors, le résultat est "vrai".
parameters correspond à une liste de valeurs numériques séparées par des virgules (,). L'étoile (*) représente la valeur courante de l'index dans le cas de registres d'index.

On donne ci-après un exemple de fichier de description de plusieurs registres mettant en oeuvre la syntaxe définie précédemment :

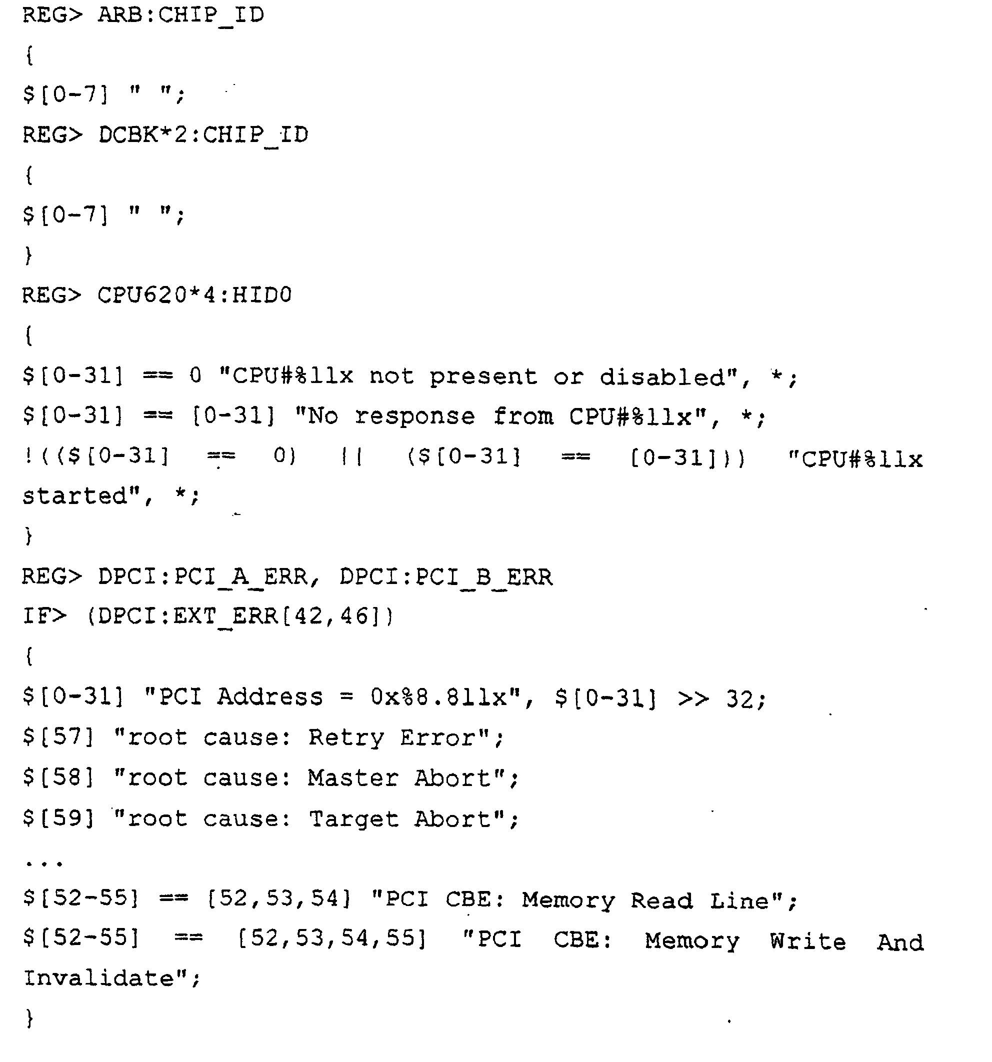

Dans l'exemple ci-dessus, "No response from CPU#%11x", *;affichera à l'écran le message suivant, dans le cas où la condition est vérifiée pour l'index 3, soit :
"No response from CPU#3, suivi de la chaîne de caractères %11x qui est remplacée automatiquement par la valeur numérique du paramètre (* dans ce cas).

Le fichier REGLES 9 contient la description des règles d'interprétation des erreurs. Il est exploité par le moteur ANACHECK 1 pour localiser le ou les composants défaillants en considérant les valeurs des registres d'état copiées dans les fichiers d'erreur. Tous les registres accédés doivent être déclarés dans le fichier COMPOSANTS 10.

La syntaxe pour le fichier COMPOSANTS 10 débute par :
// System: <SYS> Release: < version>
suivi de : 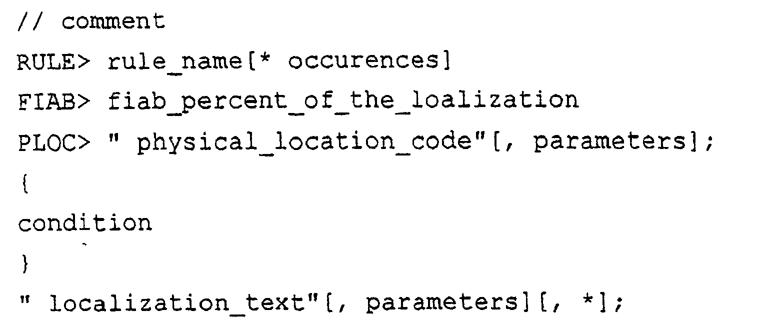 dans laquelle :
rule_name correspond au nom de la règle ;
occurrences correspond à un champ optionnel utilisé pour mettre en facteur plusieurs composants (DCBK(*2), CPUs(*4)...) dans une seule définition ;
fiab_percent correspond au pourcentage de confiance accordé par l'expert pour la localisation ;
physical_location_code correspond à une virgule (,) utilisée comme séparateur dans une liste de codes de situation physique et de paramètres optionnels ;
la chaîne de caractères est formatée avec les règles d'une interface programmatique "printf" permettant d'afficher la chaîne de caractères sur un écran , et les valeurs de registres et d'index sont unsigned long long. (%11x) ;
parameters correspond à une virgule (,) utilisée comme séparateur dans une liste d'expressions ou d'index (*).
condition correspond à une expression booléenne indiquant si le résultat de l'opération "valeur du registre courant ET un masque binaire" est nul (faux) ou non nul (vrai).

Par exemple, $ [0-2, 10] correspond à une condition pour laquelle on a la valeur du registre courant ET le masque 111000000010000...0 (64 bits de long). Si la valeur pour ce masque est différente de zéro alors, le résultat est "vrai".

localization_text correspond à une chaîne de caractères formatée avec les règles d'une interface programmatique "printf" permettant d'afficher la chaîne de caractères sur un écran, %11x est utilisé pour les paramètres de type unsigned long long.

On donne ci-après un exemple de fichier de description de plusieurs règles mettant en oeuvre la syntaxe définie précédemment :

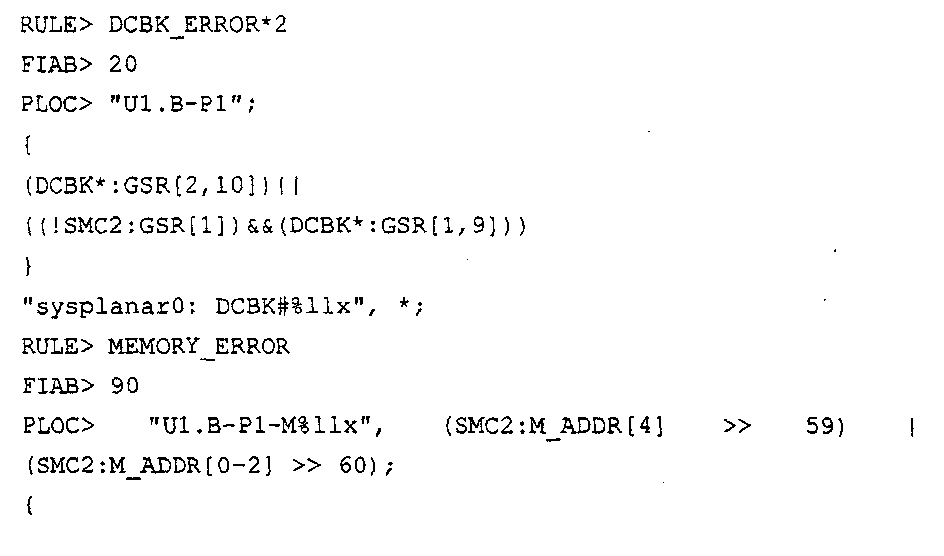

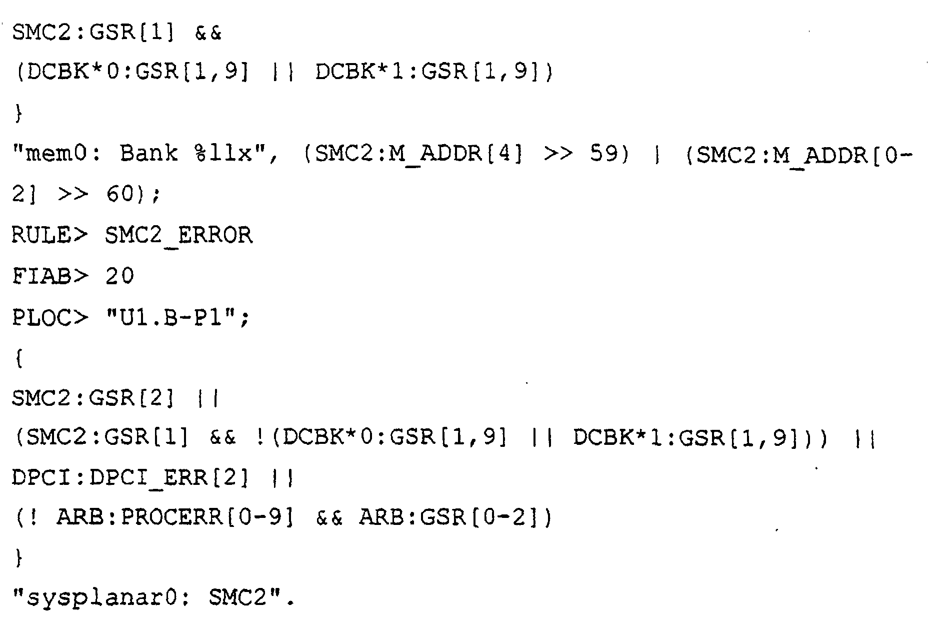

Le fichier SYSTEMES 8 répertorie les types de machines avec leur code d'identification VPD, abréviations anglo-saxonnes pour 'Vital Product Data", qui correspond à des informations de configuration d'une machine : le type, le modèle, le numéro de série, le fabricant, .... Ces informations sont stockées dans une base de donnée de la machine.

Le fichier SYSTEMES 8 est utilisé pour afficher le type de machine pour lequel l'analyse est en cours. Cette information est utile quand l'analyse des erreurs est effectuée sur une autre machine.

La syntaxe pour le fichier SYSTEMES 8 débute par :
// System: gen Release: < version>
suivi de :
- 3 ou 4 digits définissant le type de machine ; et
- le nom commercial de la machine.

On donne ci-après un exemple de fichier de description de machines mettant en oeuvre la syntaxe définie précédemment :

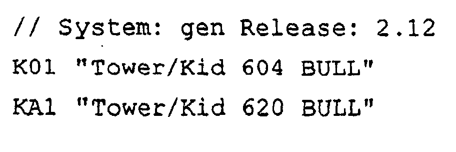

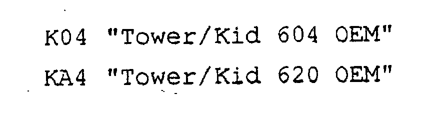

Moyennant une adaptation du moteur d'analyse, il est possible de définir un autre format de description des registres et des règles d'interprétation sans pour autant sortir du cadre de la présente invention, en utilisant par exemple le langage XML, abréviations anglo-saxonnes pour "eXtensible Markup Language".

## Revendications

1. Procédé d'analyse et de localisation de pannes matérielles dans une machine informatique stockant des informations d'erreurs de fonctionnement générées par les différents composants matériels sensibles de la machine, **caractérisé en ce qu'**il consiste à créer une interface homme/machine (I) par l'intermédiaire de laquelle les composants et les règles d'interprétation des erreurs sont décrits dans un langage structuré et exploités par la machine comme des paramètres externes en corrélation avec les informations d'erreurs pour détecter le ou les composants défaillants.

2. Procédé selon la revendication 1, **caractérisé en ce que** les paramètres externes sont déterminés à partir des registres d'état de la machine et de leurs contenus.

3. Procédé selon la revendication 2, **caractérisé en ce que** pour exprimer les paramètres externes nécessaires à la description des composants et à la description des règles, il consiste à :
- décrire les registres d'état de la machine ;
- décrire le contenu de ces registres ; et
- décrire l'ensemble de règles permettant d'extraire la localisation de la panne à partir du contenu des registres.

4. Procédé selon la revendication 3, **caractérisé en ce qu'**il consiste :
- à identifier parmi l'ensemble des registres d'états décrits, les registres ayant générés des informations d'erreurs ;
- à comparer les valeurs des registres d'état identifiés comme ayant générés des informations d'erreurs avec les valeurs des registres décrits ; et
- à localiser le ou les composants défaillants à partir du résultat de la comparaison et des règles d'interprétation décrites.

5. Outil d'analyse et de localisation de pannes matérielles dans une machine informatique comportant des moyens de stockage (4 à 7) des informations d'erreurs générées par les composants sensibles de la machine, **caractérisé en ce qu'**il comporte un moteur d'analyse d'erreurs (1) recevant sur une première série d'entrées les informations d'erreurs, et recevant sur une deuxième série d'entrées les paramètres (9 à 11) nécessaires à la description des composants sensibles de la machine et à la description des règles d'interprétation des erreurs, et **en ce qu'**il comporte une interface homme/machine (I) entre l'outil et l'expert en composants pour lui permettre de formuler les paramètres dans un langage structuré.

6. Outil selon la revendication 5, **caractérisé en ce que** le moteur d'analyse d'erreurs (1) comporte un module de lecture (2) recevant sur la première série d'entrées les informations d'erreurs (4 à 7), et **en ce qu'**il comporte un module d'analyse (3) recevant sur la deuxième série d'entrées les paramètres de descriptions (9 à 11) fournis par l'interface homme/machine (I).

7. Outil selon l'une quelconque des revendications 5 et 6, **caractérisé en ce que** les paramètres de descriptions (9 à 11) sont stockés dans un fichier électronique (F).

8. Outil selon la revendication 7, **caractérisé en ce que** le fichier électronique (F) est stocké sur un support amovible.

9. Outil selon l'une quelconque des revendications 5 à 8, **caractérisé en ce que** le moteur d'analyse d'erreurs (1) reçoit en outre sur sa deuxième série d'entrées des paramètres (8) permettant d'identifier la machine en cours d'analyse.

10. Machine informatique **caractérisée en ce qu'**elle comporte un outil d'analyse et de localisation de pannes selon l'une quelconque des revendications 5 à 9.

## Patentansprüche

1. Verfahren für die Analyse und die Lokalisierung von Hardware-Fehlern in einer Datenverarbeitungsmaschine, die Informationen über Funktionsfehler speichert, die von den verschiedenen empfindlichen Hardware-Komponenten der Maschine erzeugt werden, **dadurch gekennzeichnet, daß** es darin besteht, eine Mensch-Maschine-Schnittstelle (I) zu erzeugen, über die die Komponenten und die Fehlerinterpretationsregeln in einer strukturierten Sprache beschrieben und von der Maschine als externe Parameter ausgewertet werden, die mit den Fehlerinformationen korreliert sind, um die fehlerhafte(n) Komponente(n) festzustellen.

2. Verfahren nach Anspruch 1, **dadurch gekennzeichnet, daß** die externen Parameter anhand von zustandsregistern der Maschine und ihrer Inhalte bestimmt werden.

3. Verfahren nach Anspruch 2, **dadurch gekennzeichnet, daß** es, um die für die Beschreibung der Komponenten und für die Beschreibung der Regeln notwendigen externen Parameter auszudrücken, darin besteht:
- die Zustandsregister der Maschine zu beschreiben;
- den Inhalt dieser Register zu beschreiben; und
- die Gesamtheit der Regeln zu beschreiben, die ermöglichen, die Lokalisierung des Fehlers anhand des Inhalts der Register zu extrahieren.

4. Verfahren nach Anspruch 3, **dadurch gekennzeichnet, daß** es darin besteht:
- aus der Gesamtheit der beschriebenen Zustandsregister jene Register zu bestimmen, die Fehlerinformationen erzeugt haben;
- die Werte der Zustandsregister, für die bestimmt worden ist, daß sie Fehlerinformationen erzeugt haben, mit den Werten der beschriebenen Register zu vergleichen; und
- die fehlerhafte(n) Komponente(n) anhand des Ergebnisses des Vergleichs und der beschriebenen Interpretationsregeln zu lokalisieren.

5. Werkzeug für die Analyse und die Lokalisierung von Hardware-Fehlern in einer Datenverarbeitungsmaschine, die Mittel (4 bis 7) zum Speichern von Informationen über Fehler, die von den empfindlichen Komponenten der Maschine erzeugt worden sind, enthält, **dadurch gekennzeichnet, daß** sie einen Fehleranalysemotor (1) enthält, der an einer ersten Reihe von Eingängen die Fehlerinformationen empfängt und an einer zweiten Reihe von Eingängen die Parameter (9 bis 11) empfängt, die für die Beschreibung der empfindlichen Komponenten der Maschine und für die Beschreibung der Regeln für die Interpretation der Fehler notwendig sind, und daß es eine Mensch/Maschine-Schnittstelle (I) zwischen dem Werkzeug und dem Fachmann für die Komponenten enthält, um ihm zu ermöglichen, die Parameter in einer strukturierten Sprache zu formulieren.

6. Werkzeug nach Anspruch 5, **dadurch gekennzeichnet, daß** der Fehleranalysemotor (1) ein Lesemodul (2) enthält, das an der ersten Reihe von Eingängen die Fehlerinformationen (4 bis 7) empfängt, und daß es ein Analysemodul (3) enthält, das an der zweiten Reihe von Eingängen die Beschreibungsparameter (9 bis 11) empfängt, die von der Mensch/Maschine-Schnittstelle (I) geliefert werden.

7. Werkzeug nach einem der Ansprüche 5 und 6, **dadurch gekennzeichnet, daß** die Beschreibungsparameter (9 bis 11) in einer elektronischen Datei (F) gespeichert sind.

8. Werkzeug nach Anspruch 7, **dadurch gekennzeichnet, daß** die elektronische Datei (F) auf einem entnehmbaren Träger gespeichert ist.

9. Werkzeug nach einem der Ansprüche 5 bis 8, **dadurch gekennzeichnet, daß** der Fehleranalysemotor (1) außerdem an seiner zweiten Reihe von Eingängen Parameter (8) empfängt, die ermöglichen, die Maschine während der Analyse zu bestimmen.

10. Datenverarbeitungsmaschine, **dadurch gekennzeichnet, daß** sie ein Werkzeug für die Analyse und Lokalisierung von Fehlern nach einem der Ansprüche 5 bis 9 enthält.

## Claims

1. Method for analysis and isolation of hardware faults in a data-processing machine storing information on operation errors generated by the various sensitive hardware components of the machine, **characterised in that** it consists in creating a man/machine interface (I) via which the components and the error interpretation rules are described in a structured language and are exploited by the machine as external parameters in correlation with the error information in order to detect the faulty component(s).

2. Method according to Claim 1, **characterised in that** the external parameters are determined on the basis of the status registers of the machine and their contents.

3. Method according to Claim 2, **characterised in that**, in order to express the external parameters necessary for the description of the components and the description of the rules, it consists in:
- describing the status registers of the machine;
- describing the contents of those registers; and
- describing all the rules making it possible to extract the fault isolation on the basis of the contents of the registers.

4. Method according to Claim 3, **characterised in that** it consists in:
- identifying among all the status registers described, those registers that have generated error information;
- comparing the values of the status registers identified as having generated error information with the values of the registers described; and
- locating the faulty component(s) on the basis of the result of the comparison and the rules of interpretation described.

5. Tool for analysis and isolation of hardware faults in a data-processing machine having means (4 to 7) for storing error information generated by the sensitive components of the machine, **characterised in that** it has an error analysis engine (1) receiving from a first series of inputs the error information, and receiving from a second series of inputs the parameters (9 to 11) necessary for describing the sensitive components of the machine and for describing the error interpretation rules, and **in that** it has a man/machine interface (I) between the tool and the components expert in order to enable him to formulate the parameters in a structured language.

6. Tool according to Claim 5, **characterised in that** the error analysis engine (1) has a reading module (2) receiving the error information (4 to 7) from the first series of inputs, and **in that** it has an analysis module (3) receiving from the second series of inputs the descriptive parameters (9 to 11) provided by the man/machine interface (I).

7. Tool according to any one of Claims 5 and 6, **characterised in that** the descriptive parameters (9 to 11) are stored in an electronic file (F).

8. Tool according to Claim 7, **characterised in that** the electronic file (F) is stored on a removable medium.

9. Tool according to any one of Claims 5 to 8, **characterised in that** the error analysis engine (1) further receives from its second series of inputs parameters (8) making it possible to identify the machine being analysed.

10. Data-processing machine **characterised in that** it has a tool for analysis and isolation of faults according to any one of Claims 5 to 9.
